Europäisches Patentamt

European Patent Office

Office européen des brevets

(11) Numéro de publication : **0 540 407 A2**

# (12) DEMANDE DE BREVET EUROPEEN

(21) Numéro de dépôt : **92402907.7**

(22) Date de dépôt : **27.10.92**

(51) Int. Cl.⁵ : **G01D 3/04,** B60C 23/04

(30) Priorité : **30.10.91 FR 9113387**

(43) Date de publication de la demande :
**05.05.93 Bulletin 93/18**

(84) Etats contractants désignés :
**AT BE CH DE ES FR GB IT LI NL SE**

(71) Demandeur : **Société anonyme dite: LABINAL
5, Avenue Newton
F-78190 Montigny le Bretonneux (FR)**

(72) Inventeur : **Lang, Jean-Louis
35 rue de Soisy
F-95120 Ermont (FR)**
Inventeur : **Piplard, Frédéric
50 rue de Chavigny
F-77750 Saint Cyr S/Morin (FR)**
Inventeur : **Thuault, Michel
5 Allée des Arcades
F-78700 Conflans Ste Honorine (FR)**

(74) Mandataire : **Bernasconi, Jean et al
CABINET LEMOINE ET BERNASCONI 13,
Boulevard des Batignolles
F-75008 Paris (FR)**

(54) **Dispositif de mesure de paramètres, notamment de paramètres relatifs à des roues d'avion ou de véhicule.**

(57) Le dispositif de mesure de paramètres tels que pression à l'intérieur d'un pneumatique de roue, comporte un capteur de pression (1) susceptible de dériver en fonction de la température. Le capteur comporte des moyens sensibles à la température pour générer un signal correspondant à la température et le transmettre, de même que le signal de pression, vers des moyens d'exploitation, lesdits moyens d'exploitation étant agencés pour déduire de la valeur du signal traduisant la perturbation une correction de la valeur du signal de mesure de pression.

FIG.1

EP 0 540 407 A2

La présente invention a trait à un dispositif de mesure de paramètres, notamment de paramètres relatifs à des roues d'avion ou de véhicule, tels que par exemple une pression de pneumatique de roue, dispositif du type comprenant au moins un capteur, par exemple sur une roue, un circuit électronique associé au capteur, des moyens de transmission de signaux fonction des valeurs des paramètres mesurés, et des moyens de calcul recevant les signaux de valeurs mesurés et les exploitant.

L'un des problèmes principaux qui se posent dans les dispositifs de détection de paramètres, tels que par exemple une pression de pneumatique de roue d'avion, dont la valeur mesurée est transformée par l'électronique associée au capteur en un signal qui, par des moyens de couplage entre la partie rotative et la partie fixe de la roue, est adressé à des moyens tels que par exemple un calculateur, utilisant l'information constituée par le signal, provient de l'influence de certaines perturbations agissant sur le capteur dont la mesure se décale ou dérive en fonction de ces perturbations. Dans le cas de ces capteurs de pression, le facteur principal de perturbation est la température dont la variation provoque une dérive du capteur, étant entendu que d'autres perturbations telles que vibrations ou champs électromagnétiques peuvent également intervenir à l'occasion.

Afin de compenser la dérive du capteur en fonction de la température, on a déjà prévu d'associer au capteur, sur ou dans la roue, des moyens électroniques assurant une compensation de la dérive du capteur en fonction de la température afin de transmettre, par les moyens de couplage, un signal aussi proche que possible du signal théorique qui correspondrait à la mesure en l'absence de toute perturbation, le signal qui transite par les moyens de couplage tels que par exemple un transformateur tournant, étant ensuite adressé au calculateur pour être utilisé.

Pour des raisons de fabrication et d'entretien, ainsi que pour rapprocher le plus possible les moyens électroniques de la zone physique même où est disposé le capteur, on a déjà prévu d'intégrer le capteur et son électronique dans un même boîtier monté dans le pneumatique, le circuit électronique ayant pour mission, d'une part, de compenser la dérive du capteur, d'autre part, de mettre le signal dans une forme propre à sa transmission par les moyens de couplage.

Les solutions actuellement utilisées présentent cependant de graves inconvénients. En effet, compte tenu, d'une part, de la précision des mesures qui est maintenant exigée, d'autre part, de la plage importante de variation des perturbations qui agissent sur le capteur, par exemple une grande plage de température (de -55 à +180°C), il devient nécessaire d'utiliser des capteurs extrêmement performants et dont la dérive présente une régularité aussi élevée que possible, et notamment avec une allure proportionnelle, de façon à pouvoir être réellement compensée par les moyens électroniques sur toute la plage de variation des mesures et quel que soit le niveau de perturbation. De tels capteurs sont naturellement d'un prix élevé. En outre, le circuit électronique associé, qui met en forme et transmet des signaux de mesure, doit lui-même être d'une grande sensibilité et d'une grande qualité, accroissant encore le prix de revient de l'ensemble.

Bien entendu, la difficulté s'accroît avec les performances des installations supportant les capteurs, par exemple la performance des pneumatiques qui supportent des températures plus élevées, ou encore avec l'intervention d'un deuxième, voire d'un troisième paramètre perturbateur.

Dans certains cas on a déjà prévu, par exemple dans un microprocesseur, de réaliser un traitement numérique des signaux de pression et de température en provenance d'un capteur de pression, en utilisant les équations caractéristiques du capteur obtenues par un étalonnage du capteur sur toute la gamme de variation de la température perturbatrice, équations mémorisées dans une mémoire associée au microprocesseur. Une telle réalisation nécessite un étalonnage long et coûteux et exige une capacité de mémorisation élevée.

La présente invention se propose de remédier à ces inconvénients et de fournir un dispositif de mesure de paramètres, notamment de paramètres relatifs à des roues d'avion ou de véhicule, qui soit d'un prix de revient extrêmement réduit et d'un entretien simple tout en permettant d'obtenir, avec une grande fiabilité, des mesures d'une précision suffisante et ce sur des plages de variation extrêmement larges de perturbations tout en permettant l'interchangeabilité des capteurs, voire leur remplacement par des capteurs de types différents, et en occupant une place réduite en mémoire.

L'invention a pour objet un dispositif de mesure de paramètres, notamment de paramètres relatifs à des roues d'avion ou de véhicule, tels que par exemple la pression de pneumatiques, et dans lequel le capteur de mesure de paramètre présente une dérive sous l'influence d'au moins un paramètre perturbateur, tel que par exemple la température, du type comprenant, à l'emplacement physique même du paramètre à mesurer, un capteur (1) mesurant ledit paramètre pour générer un signal de mesure, avec des moyens sensibles au paramètre perturbateur pour générer un signal traduisant l'importance de celui-ci, ledit capteur, avec lesdits moyens, étant associé à un moyen ou circuit électronique (3) pour la mise en forme du signal de mesure du capteur, une ligne de transmission de signaux (4) et des moyens d'exploitation (6) recevant les signaux transmis par ladite ligne de transmission, lesdits moyens d'exploitation (6) conservant en mémoire des informations relatives aux dérives de capteur pour déduire de la valeur du signal traduisant la perturbation, une correction de la valeur du signal de mesure de paramètre qu'il reçoit, caractérisé en ce qu'il comporte, au niveau du capteur, des moyens pour conserver en mémoire des informations relatives à sa courbe de réponse pour un nombre réduit de valeurs possibles de la perturbation, en ce que ledit moyen ou circuit électronique(3) est agencé pour transmettre aux moyens d'exploitation (6) lesdites informations conservées au niveau du capteur, et en ce que lesdits moyens d'exploitation (6) sont agencés pour conserver en mémoire lesdites informations formant des courbes type relatives aux dérives de capteur sensiblement pour l'ensemble de la gamme des perturbations .

L'invention est avantageusement applicable à la mesure de la pression dans les pneumatiques de roues d'avions ou de véhicules par des capteurs présentant une dérive thermique, et dans lesquelles la transmission des différents signaux depuis et vers la roue s'effectue par des moyens de couplage, par exemple de type électromagnétique ou capacitif.

Grâce à l'invention, on peut alors utiliser des capteurs tout à fait ordinaires, y compris des capteurs dont la dérive en fonction du paramètre perturbateur n'est nullement linéaire et peut même être quelconque.

De façon avantageuse, les moyens d'exploitation gardent en mémoire les informations permettant de calculer les compensations en fonction des valeurs du signal de perturbation et, en particulier, on peut prévoir que le calculateur mémorise les courbes de réponse du capteur pour différentes valeurs des perturbations. Ces courbes peuvent être, suivant les types et les propriétés des capteurs, déduites théoriquement en fonction de la connaissance du capteur utilisé ou bien être obtenues par l'observation d'un échantillon représentatif de la fabrication des capteurs.

Ainsi, par exemple, ces courbes peuvent être obtenues pour différentes valeurs de la ou des perturbations, les valeurs de perturbations intermédiaires étant soit calculées par interpolation, soit approximées.

La valeur de la perturbation correspondant à la mesure faite à un instant donné par le capteur de mesure du paramètre destiné à être transmis peut être obtenue par un capteur indépendant propre à la perturbation, par exemple un capteur de température, si la température constitue la perturbation. On peut cependant également, au moins pour certains types de perturbations et notamment la température, utiliser des caractéristiques du capteur de mesure de paramètres lui-même, celui-ci étant alors susceptible de fournir deux signaux, par exemple un signal relatif à la pression et un signal relatif à la température.

De préférence, le circuit électronique associé au capteur assure également la mise en forme du signal d'information relative à la perturbation.

Dans un mode de réalisation particulièrement préféré de l'invention, lesdits moyens électroniques sont agencés pour adresser à la ligne de transmission, comprenant le moyen de couplage entre partie fixe et partie mobile, des signaux numériques, de préférence binaires, la transmission par les moyens de couplage tels que transformateur rotatif ou couplage capacitif pouvant être réalisée en codant chacun des deux signaux binaires par un train d'ondes d'une fréquence qui lui correspond, les deux fréquences étant suffisamment distinctes pour pouvoir être reconnues par les moyens d'exploitation, y compris en cas de dérive des fréquences elles-mêmes, ce qui permet d'utiliser des moyens électroniques peu précis sans aucune compensation en température, par exemple.

D'autres types de codage en fréquence peuvent bien entendu être utilisés et, dans certaines conditions, on peut également envisager d'utiliser des signaux analogiques au lieu de signaux numériques.

D'autres avantages et caractéristiques de l'invention apparaîtront à la lecture de' la description suivante, faite à titre d'exemple non limitatif et se référant au dessin annexé dans lequel :

la figure 1 représente une vue générale schématique de l'installation selon l'invention,

la figure 2 représente une vue schématique d'un capteur,

la figure 3 représente une vue schématique d'un synoptique logique de l'installation selon l'invention,

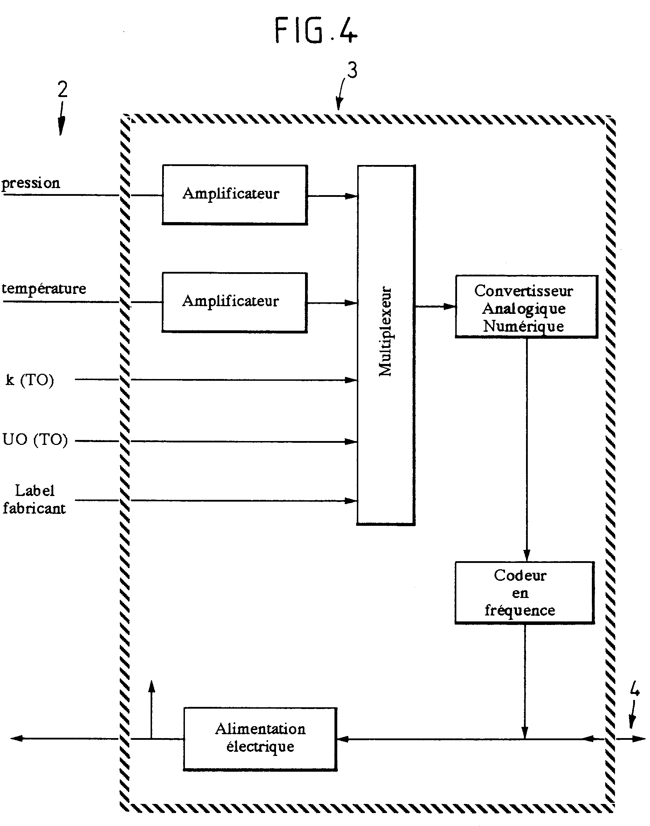

la figure 4 représente un synoptique de l'électronique associée au capteur et

la figure 5 représente un graphique qui illustre les tracés enregistrés dans le calculateur.

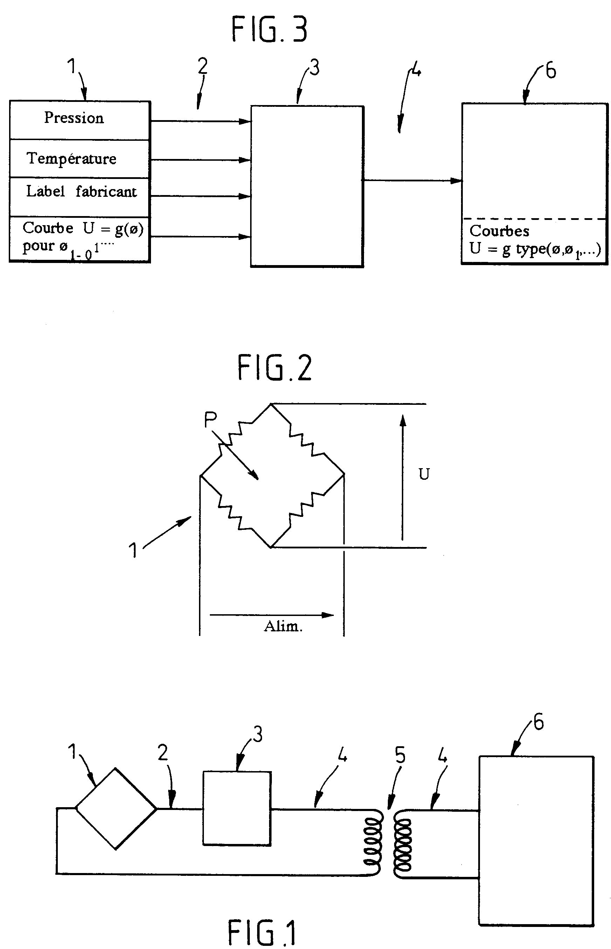

En se référant à la figure 1, on voit, de façon très schématique, une installation de mesure de la pression sur une roue d'un train d'atterrissage d'avion. Sur la jante se trouve un capteur de pression 1 adressant par une ligne éventuellement composée de plusieurs conducteurs, 2, ses informations à un circuit électronique de traitement 3. Celui-ci transforme les informations en provenance du capteur 1 en signaux binaires aux fréquences respectives 50 kHertz et 80 kHertz qui sont envoyés sur la ligne 4 et transitent par un moyen de couplage 5 constitué d'un transformateur rotatif dont un bobinage est solidaire de la partie fixe du train d'atterrissage et l'autre bobinage de la roue, la sortie du premier bobinage aboutissant à un calculateur 6 muni d'une interface convenable (non représentée) assurant la transformation des signaux de la ligne 4 en impulsions directement utilisables par le calculateur.

A titre d'exemple, le capteur peut être un capteur du type jauge à pont de Wheatstone résistif dont la partie sensible à la pression est schématiquement représentée à la figure 2. Comme on le voit sur la figure 3, les stimuli provenant de l'électronique 3 permettent de mesurer, dans l'ordre, la pression mesurée par le capteur, puis la température mesurée par le capteur, le label d'identification (fixe) du fabricant du capteur et les éléments permettant de caractériser la courbe U = g ($\Phi$) pour des perturbations connues (par exemple une température), U étant la tension générée par le capteur pour une pression $\Phi$. Ces informations, mises en forme par l'électronique de traitement, sont ensuite adressées via la ligne 4 et les moyens de couplage 5 au calculateur 6. Celui-ci comporte en mémoire les courbes U = gtyp($\Phi$, $\phi 1$, $\phi 2$ ...), où $\phi 1$, $\phi 2$ ... sont les facteurs de perturbation, par exemple la température T, lesdites courbes correspondant au label du fabricant, et procède ensuite à la correction en fonction du signal de valeur de température qu'il reçoit. La mesure du paramètre de pression $\Phi$ est ainsi compensée, puis utilisée par les moyens d'exploitation.

Le calcul des éléments à mémoriser dans le dispositif selon l'invention peut être effectué, d'une façon générale, de la façon suivante :

La courbe caractéristique du capteur utilisé U = f($\Phi$), $\Phi$ étant la valeur physique mesurée par le capteur, par exemple la pression P, U la valeur électrique ou autre obtenue. Par exemple pour la pression P, la courbe U = f (P) sera U = k * P + Uo où k est la pente de la droite, Uo représentant le décalage fixe. Du fait que le capteur dérive en fonction des perturbations $\phi 1$, $\phi 2$, $\phi 3$ ..., il est caractérisé par la courbe U = g($\Phi$, $\phi 1$, $\phi 2$, $\phi 3$ ...). Ainsi, dans l'exemple du capteur de pression U = k(T) * P + Uo(T) où T est la température, k et Uo varient en fonction de la température.

On détermine alors la courbe U = g($\Phi$, $\phi 1$, $\phi 2$, $\phi 3$ ...) pour des perturbations $\phi 1$-0, $\phi 2$-0, $\phi 3$-0 données pour chaque capteur et, pour un type de capteur donné, on déterminera la valeur typique de U soit par l'aspect théorique du capteur utilisé, soit par l'observation d'un échantillon représentatif de la fabrication des capteurs, ce qui permet d'obtenir un faisceau de courbes Utyp = h($\Phi$, $\phi 1$, $\phi 2$, $\phi 3$ ...) fonctions des différentes perturbations. En supposant, ce qui est le cas pour une fabrication homogène, que l'écart entre la valeur de U d'un capteur donné et Utyp pour des perturbations $\phi 1$-0, $\phi 2$-0, $\phi 3$-0 données est le même que celui de la fonction U du même capteur et de Utyp pour des perturbations $\phi 1$, $\phi 2$, $\phi 3$ quelconques, il suffira alors de déduire U($\Phi$, $\phi 1$, $\phi 2$, $\phi 3$ ...) = Utyp($\Phi$, $\phi 1$, $\phi 2$, $\phi 3$ ...) + U($\Phi$, $\phi 1$-0, $\phi 2$-0, $\phi 3$-0 ...) - Utyp ($\Phi$, $\phi 1$-0, $\phi 2$-0, $\phi 3$-0 ...).

Ainsi, par exemple pour des capteurs de pression de pneumatiques, on détermine pour chaque capteur d'un type donné et à une même température déterminée To, la courbe U = k (To) * P + Uo(To). En outre, pour ce type de capteur, on définit la courbe de variation des coefficients k et Uo en fonction de la température soit par la théorie, soit en calculant la moyenne sur un lot représentatif de fabrication de ce capteur donné. La tension délivrée par le capteur sera alors, à une température T donnée, U = (k moy (T) + k (To) - kmoy (To)) * P + Uomoy (T) + Uo (To) - Uomoy (To).

Il est alors avantageux de prévoir de stocker dans le capteur lui-même l'information fixe déterminée par la courbe U = k(To) * P + Uo(To), ce qui, dans un cas pratique, correspond par exemple à stocker dans le capteur deux informations k (To) et Uo (To). Ces informations, qui forment ainsi la courbe U = g ($\Phi$) pour une perturbation donnée, en l'occurrence To, seront donc disponibles pour la lecture par le circuit électronique de traitement 3.

D'une façon générale, si la courbe U = g($\Phi$, $\phi 1$-0, $\phi 2$-0, $\phi 3$-0 ...) peut être décrite par U = h1 ($\Phi$) * g1 ($\phi 1$-0, $\phi 2$-0, $\phi 3$-0 ... ) + h2 ($\Phi$) * g2 ($\phi 1$-0, $\phi 2$-0, $\phi 3$-0 ... ) + ..., les informations stockées dans le capteur sont alors g1 ($\phi 1$-0, $\phi 2$-0, $\phi 3$-0 ...), g2 ($\phi 1$-0, $\phi 2$-0, $\phi 3$-0 ...), ..., ces informations étant des valeurs fixes.

Dans le calculateur seront stockées les courbes U = gtyp ($\Phi$, $\phi 1$, $\phi 2$, $\phi 3$ ...) pour différentes valeurs des perturbations. Les valeurs de U pour des valeurs de perturbations intermédiaires sont alors calculées par interpolation ou approximées d'une façon usuelle.

En variante, on peut stocker dans le capteur lui-même non pas les valeurs g1, g2, ... mais leurs écarts par rapport aux valeurs typiques, ce qui diminue la quantité d'informations.

Les informations fixes dans le capteur peuvent être réalisées par des résistances proportionnelles aux valeurs à transmettre.

De même que l'on compense les valeurs des paramètres du capteur en fonction des perturbations, on peut compenser les erreurs de l'électronique de traitement dues aux perturbations. Ces compensations sont effectuées, comme pour le capteur, au niveau du calculateur.

**Exemple d'application.**

Chaque capteur est caractérisé par la courbe
u i = k i(T) * UO(T)
Les capteurs d'une fabrication sont représentés par la courbe moyenne
u typ = k typ(T) * P + UO typ(T)
Avec un capteur "i", le fabricant ajoute une résistance proportionnelle à k i(TO) et une autre à U0(TO)
Dans le calculateur, on mémorise les paramètres de la courbe moyenne en fonction de la température :
à T0 : k typ(T0) et U0 typ(TO)
à T1 : k typ(T1) et U1 typ(T1)
à T2 : k typ(T2) et U2 typ(T2) etc...
La sonde de température intégrée au capteur indique la valeur T1,
Le capteur de pression donne une tension de valeur U lue1,
Le boîtier capteur 1 fournit donc les informations analogiques suivantes à l'électronique de traitement :
T1,
U lue1,
k i(T0)

U0(T0),

et le label fabricant.

L'électronique de traitement 3 met en forme ces signaux, les multiplexe, les transforme en numérique, puis les module en fréquence pour les envoyer vers le moyen de couplage 5, puis vers le calculateur 6.

Le calculateur cherche, dans la zone mémoire réservée aux données du fabricant (zone sélectionnée par le label fabricant), les coefficients k typ(T1) et U1 typ(T1) pour la température T1 et k typ(T0) et U0 typ(T0) pour T0.

Le calculateur donne donc la valeur calculée P c telle que

$$k \; typ(T1) * P \; c + U0 \; typ(T1) - k \; typ(T0) * P \; c - U0 \; typ(T0) = U \; lue1 - k \; i(T0) * P \; c - U0(T0) \; soit \; P \; c = [U0 \; typ(T0) - U0 \; typ(T1) + U \; lue1 - U0(T0) + UO \; typ(T0) - U0 \; typ(T1)] / [k \; typ(T1) - k \; typ(T0) + k \; i(T0)].$$

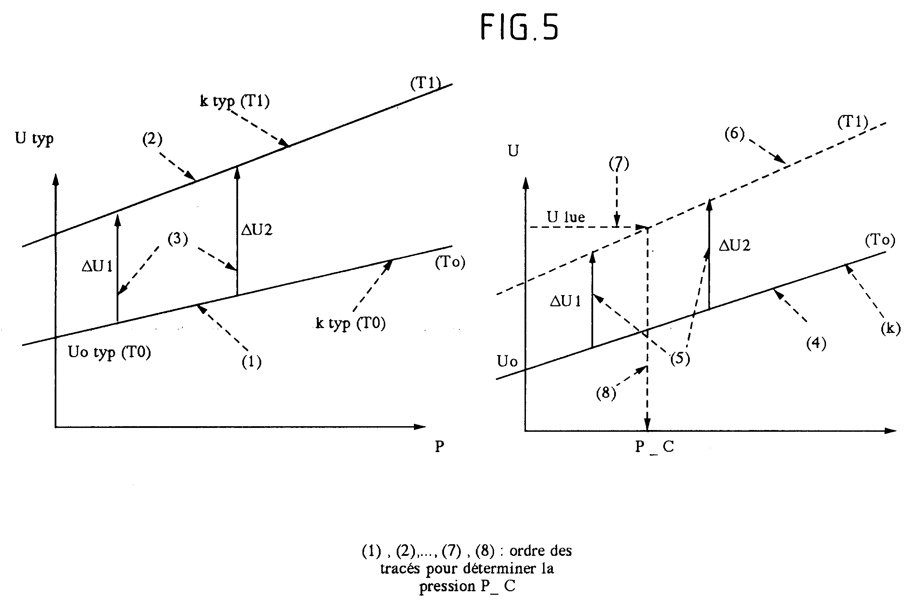

Le graphique de la figure 5 illustre les calculs effectués dans le calculateur pour déterminer cette pression P c.

## Revendications

1. Dispositif de mesure de paramètres, notamment de paramètres relatifs à des roues d'avion ou de véhicule, tels que par exemple la pression de pneumatiques, et dans lequel le capteur de mesure de paramètre présente une dérive sous l'influence d'au moins un paramètre perturbateur, tel que par exemple la température, du type comprenant, à l'emplacement physique même du paramètre à mesurer, un capteur (1) générant un signal de mesure dudit paramètre, avec des moyens sensibles au paramètre perturbateur pour générer un signal traduisant l'importance de celui-ci, ledit capteur, avec lesdits moyens, étant associé à un moyen ou circuit électronique (3) pour la mise en forme du signal de mesure du capteur, une ligne de transmission de signaux (4) et des moyens d'exploitation (6) recevant les signaux transmis par ladite ligne de transmission, lesdits moyens d'exploitation (6) conservant en mémoire des informations relatives aux dérives de capteur pour déduire de la valeur du signal traduisant la perturbation, une correction de la valeur du signal de mesure de paramètre qu'il reçoit, caractérisé en ce qu'il comporte, au niveau du capteur, des moyens pour conserver en mémoire des informations relatives à sa courbe de réponse pour un nombre réduit de valeurs possibles de la perturbation, en ce que ledit moyen ou circuit électronique(3) est agencé pour transmettre aux moyens d'exploitation (6) lesdites informations conservées au niveau du capteur, et en ce que lesdits moyens d'exploitation (6) sont agencés pour conserver en mémoire des courbes type relatives aux dérives de capteur sensiblement pour l'ensemble de la gamme des perturbations.

2. Dispositif selon la revendication 1, caractérisé en ce que lesdits moyens de mémoire au niveau du capteur (1) sont agencés pour conserver en mémoire lesdites informations relatives à sa courbe de réponse pour une valeur donnée de la perturbation.

3. Dispositif selon l'une des revendications 1 et 2, caractérisé en ce que ladite ligne de transmission (4) présente une zone de couplage 5.

4. Dispositif selon l'une des revendications 1 à 3, caractérisé en ce qu'il comporte un capteur de pression et des moyens sensibles à la température au niveau dudit capteur.

5. Dispositif selon la revendication 4, caractérisé en ce que ledit capteur de pression possède également des moyens générant un signal de valeur de la température.

6. Dispositif selon l'une des revendications 1 à 5, caractérisé en ce que lesdites informations relatives à la courbe de réponse du capteur sont des informations d'écart par rapport à une fonction type représentative du type de capteur pour cette valeur de perturbation.

7. Dispositif selon l'une quelconque des revendications 1 à 6, caractérisé en ce que le capteur est susceptible de délivrer à l'électronique associée (3) la mesure brute de la pression, la mesure de la température, un label d'identification de capteur et les informations représentatives d'une courbe de réponse pour au moins une valeur donnée de perturbation.

8. Dispositif selon l'une quelconque des revendications 1 à 7, notamment pour la mesure de la pression dans les pneumatiques de roue de train d'atterrissage d'avion, caractérisé en ce que que la ligne (4) comporte un moyen de couplage de type transformateur électromagnétique tournant (5).

# FIG. 3

| | | |
|---|---|---|
| Pression | | |
| Température | | |
| Label fabricant | | |
| Courbe $U = g(\emptyset)$ pour $\emptyset_{1-0}^{1....}$ | | |

Courbes
$U = g$ type$(\emptyset,\emptyset_1...)$

# FIG. 2

P

$U$

1

Alim.

# FIG. 1

EP 0 540 407 A2

# FIG.4

2
3

pression ──→ [ Amplificateur ] ──→

température ──→ [ Amplificateur ] ──→

k (TO) ──────────────────→

UO (TO) ─────────────────→

Label
fabricant ────────────────→

[ Multiplexeur ] ──→ [ Convertisseur Analogique Numérique ]

[ Codeur en fréquence ]

4

←── [ Alimentation électrique ] ←──→

7